# EUROPEAN PATENT APPLICATION

(11) **EP 4 474 367 A1**
(43) Date of publication of application: **11.12.2024**
(21) Application number: 24171904.6
(22) Date of filing: 23.04.2024
(51) Int. Cl.: C04B 38/10, C04B 40/00

(54) **FOAMING AGENT COMPOSITION AND USE THEREOF**

(30) Priority: 08.05.2023 PL 44477923
(71) Applicant: PCC Exol Spolka Akcyjna, 56-120 Brzeg Dolny (PL)
(72) Inventor: BRANDYS, Rafal, Wroclaw (PL); JAKOB, Alina, Wroclaw (PL)
(74) Representative: AOMB Polska Sp. z.o.o.

(57) **Abstract**

The invention relates to a foaming agent composition containing water and anionic surfactants and the use of this composition as an aerating agent in the process of obtaining gypsum-based products, in particular plasterboards. The composition according to the invention contains a mixture of at least two different alkyl sulphates defined by the general formula (1):

**(ROSO₃⁻)M^{y+}** (1)

wherein:
R denotes a linear and/or branched alkyl chain, wherein the number n of carbon atoms is an integer from 8 to 12, and the mean number of carbon atoms nₘ in the mixture of alkyl sulphates is from 8.0 to 8.8 and is equal to the weighted sum of the n values of individual alkyl sulphates contained in the mixture according to their weight share in this mixture,
x denotes 1 or 2,
M^{y+} denotes an alkali metal cation or alkaline earth metal cation, whereby y = x,

wherein said at least two alkyl sulphates differ in the number n of carbon atoms in the alkyl chain R,
and the composition further comprises an amino acid surfactant.

## Description

### Field of the invention

The invention relates to a foaming agent composition containing water and anionic surfactants and the use of this composition as an aerating agent in a process of obtaining gypsum-based products, in particular plasterboards. Due to the strong coalescence properties of the foam, the composition according to the invention is particularly useful for aerating gypsum-based products, such as plasterboards produced using unstable foam technology.

### Background art

Plasterboard (gypsum board) is a construction material that consists of a gypsum core and a cardboard (paper) cover. The production process of the boards requires the use of chemical additives that facilitate processing and modify the properties of gypsum, i.e. foaming agents, plasticizers and setting retarders. Foaming agents play an extremely important role in the process. These are mainly mixtures of surfactants the task of which is to reduce weight of a board by limiting gypsum dosage. This is achieved by the introduction of foam, which, after setting the plaster, leaves empty, small pores. This is a huge advantage both for the manufacturer- cheaper production process, and for the end user - lower load on the building structure. For decades, foaming agents were based only on classic resin soaps, and over time they were replaced by alkyl sulphates (AS) and alkyl ether sulphates (AES), which significantly improved the efficiency of the process.

Currently, there are three groups of foaming agents on the European market:
- stable foam technology products - forming small pores, evenly distributed in the plasterboard core; these products are still the most frequently used agents for industrial aeration of plasterboards;
- semi-stable foam technology products - forming pores of medium size or widely varying sizes in the board core;
- unstable foam technology products - forming large pores in the plasterboard core, said pores significantly reducing the board weight; these products constitute a modern approach to aeration of plasterboards; this technology is related to the present application.

Foam compositions are also disclosed in the prior art.

Patent PL207153B1 discloses a gypsum composition which, in addition to gypsum and water, contains a surfactant composition containing alkyl sulphates. The mean number of carbon atoms in the alkyl sulphate composition is from 10 to 11. The surfactant composition described in this patent is used in stable foam technology and is dedicated to aerating plasterboards that are to have a standard fine gypsum core structure.

The PL205528B1 patent concerns a method for producing gypsum boards using a surfactant containing at least one alkyl sulphate, where the mean number of carbon atoms is from 9 to 10. Although, unlike the solution from the PL207153B1 patent, the method for producing gypsum boards according to the PL205528B1 patent has certain features of unstable foam technology, the formed foam structure still shows the characteristics of stable foam, which results in relatively fine pores in the gypsum core.

Patent EP2225326B1 discloses a gypsum suspension containing foam formed from a mixture of anionic alkyl sulphate surfactants with incorporated ethylene oxide, as well as a method for producing plasterboards using this suspension.

In the light of the above information, it is clearly visible that in the state of the art there was a need to develop a foaming agent formulation that would ensure optimal properties of plasterboards with a small dosage, i.e. large pores in the gypsum core allowing for a significant reduction of the plasterboard weight. It is desirable that the foaming agent composition allows obtaining plasterboards characterized by a large-cell porous structure and high efficiency, i.e. high efficiency in foam formation.

The board produced using with the claimed formulation should have a unique, large-cell porous structure and also, due to the addition of amino acids, high efficiency.

It has surprisingly been found that all these needs are met by the composition of the present invention.

### Summary of the invention

The subject of the invention is a foaming agent composition containing water and anionic surfactants, characterized by the fact that it contains a mixture of at least two different alkyl sulphates defined by the general formula (1):

**(ROSO₃⁻)M^{y+}** (1)

wherein:
R denotes a linear and/or branched alkyl chain, wherein the number n of carbon atoms is an integer from 8 to 12, and the mean number of carbon atoms nₘ in the mixture of alkyl sulphates is from 8.0 to 8.8 and is equal to the weighted sum of the n values of individual alkyl sulphates contained in the mixture according to their weight share in this mixture,
x denotes 1 or 2,
M^{y+} denotes an alkali metal cation or alkaline earth metal cation, whereby y = x,
wherein said at least two alkyl sulphates differ in the number n of carbon atoms in the alkyl chain R, and the composition further comprises an amino acid surfactant.

Preferably, the composition of the invention contains an amino acid surfactant in an amount of 0.01 to 1.0% by weight of the composition. In a particularly preferred embodiment of the composition according to the invention, the amino acid surfactant is a N-lauryl sarcosinate of an alkali metal, preferably sodium, preferably present in the range from 0.05 to 0.7% by weight of the composition.

Preferably, the mean number of carbon atoms in the alkyl sulphate mixture is from 8.5 to 8.8.

Preferably, M^{y+} in formula (1) is a metal cation selected from Na, K, Li, Ca, Mg, Ba.

Preferably, in the composition of the invention, the alkyl sulphate mixture contains at least one compound selected from sodium octyl sulphate, sodium decyl sulphate and sodium dodecyl sulphate.

Preferably, the composition according to the invention contains sodium octyl sulphate and sodium decyl sulphate, and particularly preferably from 1 to 25% by weight of sodium octyl sulphate and from 1 to 25% by weight of sodium decyl sulphate.

Preferably, the composition according to the invention contains sodium octyl sulphate in the range of 62% to 75% by weight, based on the weight of all surfactants contained in the composition.

Preferably, the composition of the invention contains sodium decyl sulphate in the range of 25% to 38% by weight, based on the weight of all surfactants contained in the composition.

The subject of the invention is also the use of the composition according to the invention defined above as an aerating agent in a process of obtaining gypsum-based products, in particular plasterboards. Preferably, the composition according to the invention is used in form of an aqueous solution with a concentration of 0.1% to 10% by weight.

### Advantages of the invention

The composition according to the invention is a mixture of specialist foaming agents dedicated to aerating plasterboards using unstable foam technology. The mixture of these anionic surfactants allows the formation of pores with a unique large-cellular structure in the plasterboard core, which allows for a significant reduction of the board's weight.

Due to the high content of alkyl sulphate with a smaller number of carbon atoms in the alkyl chain, preferably octyl sulphate, the diameter of the introduced air bubbles is much larger than in the case of standard aerating agents used in stable foam technology. The foam structure produced using the composition according to the invention is highly unstable and the coalescence of bubbles is significantly accelerated.

A properly selected content of alkyl sulphate with a larger number of carbon atoms in the alkyl chain, preferably decyl sulphate, in the composition according to the invention ensures that the foam does not disappear too quickly and significantly improves the overall efficiency of the foaming agent. The addition of an amino acid surfactant has a synergistic effect with an alkyl sulphate with a larger number of carbon atoms in the alkyl chain, preferably decyl sulphate, minimizing foam loss and increasing the efficiency of its formation. Increased foam formation efficiency allows you to reduce the amount of dosed foaming agent and gypsum, which generates significant material savings during board production.

As a result of using the discussed formulation, high-quality plasterboards with low weight are obtained.

### Detailed description of the invention

In the context of the present invention, the term "large pores" means pores having a size greater than 0.8 mm², while the term "small pores" means pores having a size smallerthan 0.5 mm², the pore size in mm² meaning the mean bubble area (MBA) of the air bubbles forming pores.

As already indicated above, the invention relates to a specialist foaming agent composition capable of forming large pores and dedicated to aerating plasterboards in order to reduce their weight. Advantages of the formulation are based on the key ratio of salts of two different alkyl sulphates (preferably octyl sulphate to decyl sulphate), expressed by the mean number of carbon atoms in the alkyl chain R in formula (1) ranging from 8.0 to 8.8 (preferably from 8.5 to 8.8) and the use of an amino acid surfactant (preferably N-lauryl sarcosinate salt).

In the context of the present invention, the term "amino acid surfactant" means an anionic surfactant composed of polar amino acids (hydrophilic moieties) and compounds with long alkyl chains (hydrophobic moieties). Typically, the alkyl chains contained in the structure of amino acid surfactants have a length of 10 to 18 carbon atoms. Chemically, amino acid surfactants are amides. They are produced on the basis of biomimetics, i.e. raw materials that imitate chemical compounds of natural origin. Fatty acids obtained from plant raw materials are also used to produce amino acid surfactants. Amino acid surfactants are characterized by a high degree of biodegradability, therefore they are safe and environmentally friendly. Bacterial decomposition of these compounds occurs faster than most anionic surfactants available on the market. Moreover, which is particularly important in the context of the present invention, amino acid surfactants are characterized by very good foaming properties. Unlike other surfactants, their foaming properties are not impaired in an alkaline environment. High, stable and thick foam is also formed in the presence of hard water or sebaceous substances. Due to this fact, amino acid surfactants are as foamy as surfactants such as betaines or ethoxylated sodium lauryl sulphate (SLES).

Examples of amino acid surfactants include alkyl-L-glutamates, alkyl-glycine, alkyl-L-alanine, alkyl-L-valine, alkyl-L-leucine, alkyl-D-alanine, alkyl-D-valine, alkyl- D-leucine, as well as dipeptide surfactants, i.e. amino acid surfactants composed of two amino acids connected together. A preferred amino acid surfactant in the context of the present invention is alkylglycine, and in particular N-dodecanoyl-N-methylglycine [N-lauryl sarcosine], preferably in form of sodium salt.

The structure of a gypsum core of a plasterboard produced using the composition according to the invention has uniquely large pores. Moreover, dosing the composition according to the invention in the plasterboard production process is much easier owing to its high stability and foaming efficiency.

Preferably, the foaming agent composition according to the invention contains two different alkyl sulphates of formula (1), differing in the number of carbon atoms in the alkyl chain - (a) and (b), respectively, an amino acid surfactant (c) and water (d) in the following ranges:
(a) 1-25 wt%, in particular 10-25 wt%.
(b) 1-20% by weight, in particular 10-25% by weight.
(c) 0.01-1% by weight, in particular 0.1-0.2% by weight.
(d) 49-97.99 wt.%, in particular 49.8-79.9 wt.%.

Particularly preferred alkyl sulphates included in the alkyl sulphate mixture in the composition of the invention include: sodium octyl sulphate, sodium decyl sulphate and sodium dodecyl sulphate.

Preferably, the composition according to the invention contains two anionic sodium alkyl sulphate surfactants:
A) from 1 % to 25% by weight of sodium octyl sulphate,
B) from 1 % to 20% by weight of sodium decyl sulphate.

In addition to these two agents, the composition according to the invention contains an amino acid anionic surfactant, preferably in an amount from 0.01% to 1.0% by weight, the agent preferably being sodium N-lauryl sarcosinate (sodium salt of N-dodecanoyl-N-methylglycine, CAS No.: 137-16-6). The addition of an amino acid surfactant in the composition according to the invention increases the stability and effectiveness of the obtained foam, which in turn leads to the possibility of reduced dosage of the composition in the plasterboard production process, meaning greater savings.

The resulting composition has a viscosity measured at 20°C in the range of about 10 to about 400 mPa·s, preferably in the range of about 30 to about 300 mPa·s, and a mean bubble area (MBA) after 500 seconds from the moment of foaming in the range from about 300,000 to about 950,000 µm² (0.30 mm² - 0.95 mm²), preferably from about 320,000 to about 900,000 µm² (0.32 mm² - 0.90 mm²).

The invention also relates to the use of the composition according to the invention as an aerating agent in a process of obtaining gypsum-based products, in particular plasterboards. Preferably, the composition according to the invention is used in form of an aqueous solution with a concentration of 0.1% to 10% by weight.

The composition according to the invention is obtained by introducing its ingredients, i.e. water and surfactants, into a vessel of an appropriately selected volume and then mixing them until a homogeneous composition is obtained. Such mixing may be carried out, for example, by means of a mechanical mixer, such as a mechanical mixer with an anchor tip. Preferably, the mixing temperature corresponds to room temperature (approximately 25°C). The maximum temperature during the preparation of the composition must not exceed approximately 50°C.

### Examples

### Example 1

The composition according to the invention was prepared as follows:
a) An anionic surfactant of the formula C₈H₁₇OSO₃Na (sodium octyl sulphate) was introduced into a 2 L beaker in an amount of 15% by weight in relation to the total weight of the composition.
b) A second anionic surfactant of the formula C₁₀H₂₁OSO₃Na (sodium decyl sulphate) was introduced in an amount of 20% by weight in relation to the total weight of the composition.
c) The remaining part of the composition (65% by weight) was demineralized water.
d) The ingredients were mixed for about 30 minutes at a speed of 20 rpm. Using a mechanical mixer with an anchor tip.

The above steps were carried out at room temperature (25°C).

**Results:** Foam tests were carried out using a DFA100 Krüss foam analyzer. The height of the foam, its stability and the size of bubbles in the foam were checked. The above composition showed a foaming capacity (a parameter used interchangeably with the foam height) of 180 ml (it should always be above 160 ml) and a stability (half-life foam value) of 170 seconds (an auxiliary parameter informing about instability). The size of air bubbles in the foam was approximately 0.3 mm², which is within the lower required size range (0.30 mm² - 0.95 mm²).

### Example 2

The composition according to the invention was prepared as follows:
a) An anionic surfactant - sodium octyl sulphate was introduced into a 2 L beaker in an amount of 22% by weight in relation to the total weight of the composition.
b) A second anionic surfactant - sodium decyl sulphate was introduced in an amount of 13% by weight in relation to the total weight of the composition.
c) The remaining part of the composition (65% by weight) was demineralized water.
d) The ingredients were mixed for about 30 minutes at a speed of 20 rpm using a mechanical mixer with an anchor tip.

The above steps were carried out at room temperature (25°C).

**Results:** Foam tests were carried out using a DFA100 Krüss foam analyzer. The height of the foam, its stability and the size of bubbles in the foam were checked. The above composition showed a foaming capacity of 175 ml and a half-life foam stability of 150 seconds. The size of air bubbles in the foam was approximately 0.7 mm², which means that the final pores in the gypsum may have the appropriate size.

### Example 3

The composition according to the invention was prepared as follows:
a) An anionic surfactant - sodium octyl sulphate was introduced into a 2 L beaker in an amount of 10% by weight in relation to the total weight of the composition.
b) A second anionic surfactant - sodium decyl sulphate was introduced in an amount of 25% by weight in relation to the total weight of the composition.
c) The remaining part of the composition (65% by weight) was demineralized water.
d) The ingredients were mixed for about 30 minutes at a speed of 20 rpm using a mechanical mixer with an anchor tip.

The above steps were carried out at room temperature (25°C).

**Results:** Foam tests were carried out using a DFA100 Krüss foam analyzer. The height of the foam, its stability and the size of bubbles in the foam were checked. The above composition showed a foaming capacity of 190 ml and a half-life foam stability of 200 seconds. The size of air bubbles in the foam was approximately 0.2 mm², which is below the required size.

### Example 4

The composition according to the invention was prepared as follows:
a) An anionic surfactant - sodium octyl sulphate was introduced into a 2 L beaker in an amount of 25% by weight in relation to the total weight of the composition.
b) The second anionic surfactant - sodium decyl sulphate was introduced in an amount of 10% by weight based on the total weight of the composition.
c) The remaining part of the composition (65% by weight) was demineralized water.
d) The ingredients were mixed for about 30 minutes at a speed of 20 rpm. using a mechanical mixer with an anchor tip.

The above steps were carried out at room temperature (25°C).

**Results:** Foam tests were carried out using a DFA100 Krüss foam analyzer. The height of the foam, its stability and the size of bubbles in the foam were checked. The above composition showed a foaming capacity of 150 ml and a half-life foam stability of 130 seconds. The size of air bubbles in the foam was approximately 0.8 mm². The size of air bubbles is at the appropriate level (i.e. in the range of 0.30 mm² - 0.95 mm²), but the height of the foam is much lower than in the previous exemplary compositions.

### Discussion of the results obtained for examples 1-4:

The research results presented above indicate that the appropriate ratio of sodium octyl sulphate to sodium decyl sulphate is extremely important. The greater the share of a component with an alkyl group of 8 carbon atoms (here: sodium octyl sulphate), the larger the size of the air bubbles, which directly indicates the faster coalescence of the bubbles. In turn, increasing the share of an ingredient with an alkyl group of 10 carbon atoms in the composition (here: sodium decyl sulphate) reduces the size of air bubbles, which means higher foam stability and effectiveness of the foaming agent.

Both ingredients are fully compatible with each other, dissolve very well in the composition and show an unexpected synergistic effect. Octyl sulphate is a low-foaming agent, but it accelerates coalescence. However, decyl sulphate delays coalescence, but allows the formation of a stable and high foam. For this reason, a carefully selected ratio of both ingredients is essential. An excess (i.e. a larger proportion) of sodium octyl sulphate over sodium decyl sulphate in the formulation of the composition according to the invention allows surprisingly good results to be obtained.

### Example 5

The composition according to the invention was prepared in an analogous manner as in example 2, but the formulation was supplemented with an amino acid surfactant, reducing the share of the second anionic surfactant accordingly:
a) An anionic surfactant - sodium octyl sulphate was introduced into a 2 L beaker in an amount of 22% by weight in relation to the total weight of the composition.
b) A second anionic surfactant - sodium decyl sulphate was introduced in an amount of 12.9% by weight in relation to the total weight of the composition.
c) An amino acid surfactant - sodium N-lauryl sarcosinate (sodium salt of N-dodecanoyl-N-methylglycine, CAS no.: 137-16-6) was introduced in an amount of 0.1% by weight in relation to the total weight of the composition.
d) The remaining part of the composition (65% by weight) was demineralized water.
e) The ingredients were mixed for about 30 minutes at a speed of 20 rpm using a mechanical mixer with an anchor tip.

The above steps were carried out at room temperature (25°C).

**Results:** Foam tests were carried out using a DFA100 Krüss foam analyzer. The height of the foam, its stability and the size of bubbles in the foam were checked. The above composition showed a foaming capacity of 180 ml and a half-life foam stability of 160 seconds. The size of air bubbles in the foam was approximately 0.8 mm², which means that the final pores in the gypsum may have the appropriate size.

### Example 6

The composition according to the invention was prepared in an analogous manner as in example 4, but the formulation was supplemented with an amino acid surfactant, reducing the share of the second anionic surfactant accordingly:
a) An anionic surfactant - sodium octyl sulphate was introduced into a 2 L beaker in an amount of 25% by weight in relation to the total weight of the composition.
b) The second anionic surfactant - sodium decyl sulphate was introduced in an amount of 9.8% by weight based on the total weight of the composition.
c) An amino acid surfactant - sodium N-lauryl sarcosinate was introduced in an amount of 0.2% by weight in relation to the total weight of the composition.
d) The remaining part of the composition (65% by weight) was demineralized water.
e) The ingredients were mixed for about 30 minutes at a speed of 20 rpm using a mechanical mixer with an anchor tip.

The above steps were carried out at room temperature (25°C).

**Results:** Foam tests were carried out using a DFA100 Krüss foam analyzer. The height of the foam, its stability and the size of bubbles in the foam were checked. The above composition showed a foaming capacity of 170 ml and a half-life foam stability of 150 seconds. The size of air bubbles in the foam was approximately 0.9 mm². The air bubble size is within the appropriate range (provided in Example 1 above).

### Discussion of the results obtained for examples 5-6:

The above-presented test results of the compositions according to the invention with the addition of sodium N-lauryl sarcosinate indicate that this additional ingredient had a significant, positive effect on the foam parameters. The addition of an amino acid surfactant in both cases unexpectedly increased the stability and effectiveness of the foam, while avoiding a reduction in the size of air bubbles. The amino acid surfactant can be successfully used as an innovative supplement to the basic formulation of the composition according to the invention.

## Claims

1. A foaming agent composition containing water and anionic surfactants, **characterized in that** it contains a mixture of at least two different alkyl sulphates defined by the general formula (1):
**(ROSO₃⁻)M^{y+}** (1)
wherein:
R denotes a linear and/or branched alkyl chain, wherein the number n of carbon atoms is an integer from 8 to 12, and the mean number of carbon atoms nₘ in the mixture of alkyl sulphates is from 8.0 to 8.8 and is equal to the weighted sum of the n values of individual alkyl sulphates contained in the mixture according to their weight share in this mixture,
x denotes 1 or 2,
M^{y+} denotes an alkali metal cation or alkaline earth metal cation, whereby y = x,
wherein said at least two alkyl sulphates differ in the number n of carbon atoms in the alkyl chain R, and the composition further comprises an amino acid surfactant.

2. The composition according to claim 1, comprising an amino acid surfactant in an amount of 0.01 to 1.0% by weight of the composition.

3. The composition according to claim 1 or 2, wherein the amino acid surfactant is a N-lauryl sarcosinate of an alkali metal, preferably sodium.

4. The composition of claim 3, comprising sodium N-lauryl sarcosinate in the range of 0.05 to 0.7% by weight of the composition.

5. The composition according to one of claims 1-4, wherein the mean number of carbon atoms nₘ in the mixture of alkyl sulphates is from 8.5 to 8.8.

6. The composition according to one of claims 1-5, wherein M^{y+} in the formula (1) is a metal cation selected from Na, K, Li, Ca, Mg, Ba.

7. The composition according to one of claims 1-6, wherein the mixture of alkyl sulphates contains at least one compound selected from sodium octyl sulphate, sodium decyl sulphate and sodium dodecyl sulphate.

8. The composition accordingto one of claims 1-7, **characterized in that** it contains sodium octyl sulphate and sodium decyl sulphate.

9. The composition according to claim 8, **characterized in that** it contains from 1 to 25% by weight of sodium octyl sulphate and from 1 to 25% by weight of sodium decyl sulphate.

10. The composition according to claim 8 or 9, **characterized in that** it contains sodium octyl sulphate in the range of 62% to 75% by weight based on the weight of all surfactants contained in the composition.

11. The composition according to one of claims 8-10, **characterized in that** it contains sodium decyl sulphate in the range from 25% to 38% by weight based on the weight of all surfactants contained in the composition.

12. Use of the composition defined in one of claims 1 - 11 as an aerating agent in a process of obtaining gypsum-based products, in particular plasterboards.

13. The use according to claim 12, **characterized in that** the composition is used in the form of an aqueous solution with a concentration of 0.1% to 10% by weight.
